# EUROPEAN PATENT APPLICATION

(11) **EP 0 781 700 A1**
(43) Date of publication of application: **02.07.1997**
(21) Application number: 96308483.5
(22) Date of filing: 25.11.1996
(51) Int. Cl.: B62D 55/092, F16L 55/128

(54) **Track roller with plug**

(30) Priority: 28.12.1995 US 579898
(71) Applicant: THE TORRINGTON COMPANY, Torrington, Connecticut 06790 (US)
(72) Inventor: Clark, Leecroft A., Stratford, CT 06497 (US); Dickison, Marc T., Torrington, CT 96790 (US)
(74) Representative: Feakins, Graham Allan

(57) **Abstract**

A relubrication passage (51) extends to a stud end (54) of a track roller stud. A bearing (16) between a stud head (20) and an outer ring (14) provides rotatable mounting of the outer ring on the stud head. A metal plug (46) has a surface forming a close fit with the relubrication passage and is retained by a narrowing of the relubrication passage (51) at the stud end (54). A method of closing the relubrication passage by inserting the metal plug into the relubrication passage and deforming the stud end radially inwardly is also disclosed.

## Description

This invention relates generally to track rollers and, more particularly, to stud type track rollers with a plug closing one end of an axial relubrication passage.

Stud type track rollers have an integral stud for cantilever mounting of an outer ring for rolling engagement with a track or cam for the control of equipment of various types. Such track rollers may have needle rollers supporting the outer ring and may be relubricated by means of a radial relubrication passage through the stud head to an axial relubrication passage through a portion of the stud shank. Lubricant may be introduced through a cross-drilled hole in the stud shank or a fitting in the stud end.

Commonly, stud type track rollers are produced with both a cross-drilled hole and an opening in the stud end for a relubrication fitting. When the cross-drilled hole is not used, it is covered during installation. Plugs are furnished with the track rollers to close off the opening in the stud end when not used. Such plugs are generally cup shaped, pressed into the axial relubrication passage closed end first, and retained in the axial relubrication passage by friction.

Although such plugs work well for normal use, for example with relubrication pressures up to approximately 1000 pounds per square inch (psi) - 6895 kN/m², problems may occur when extremely high relubrication pressure is used. In those applications, the high pressure of lubricant in the axial relubrication passage of the track roller may cause the plug to be extruded from the stud of the track roller, allowing the lubricant to escape through the stud end instead of lubricating the needle rollers.

According to one aspect of the present invention there is provided a track roller comprising a stud having a stud head, stud shank and stud end, the stud having a relubrication passage extending to the stud end, an outer ring, bearing means between the stud head and the outer ring for providing rotatable mounting of the outer ring on the stud head; and a metal plug having a surface forming a close fit with the relubrication passage; characterised in that the plug is retained by a narrowing of the relubrication passage at the stud end.

According to a second aspect of the present invention there is provided a method of closing a relubrication passage in a track roller stud, comprising providing a stud having a stud head, stud shank and stud end, the stud having a relubrication passage extending to the stud end and inserting a metal plug into the relubrication passage at the stud end; characterised by deforming the stud end such that the stud deforms radially inwardly to retain the metal plug within the relubrication passage.

For a better understanding of the invention and to show how the same may be carried into effect, reference will now be made, by way of example, to the accompanying drawings, in which:-
Fig. 1 is a side view of a stud type track roller with portions cut away, illustrating a known track roller;
Fig. 2 is an enlarged cross-sectional view of portions of the track roller of Fig. 1;
Fig. 3 is a cross-sectional view of portions of a stud type track roller illustrating the present invention; and
Fig. 4 is an enlarged cross-sectional view of portions of a stud type track roller and a combination insertion/staking tool illustrating another aspect of the present invention.

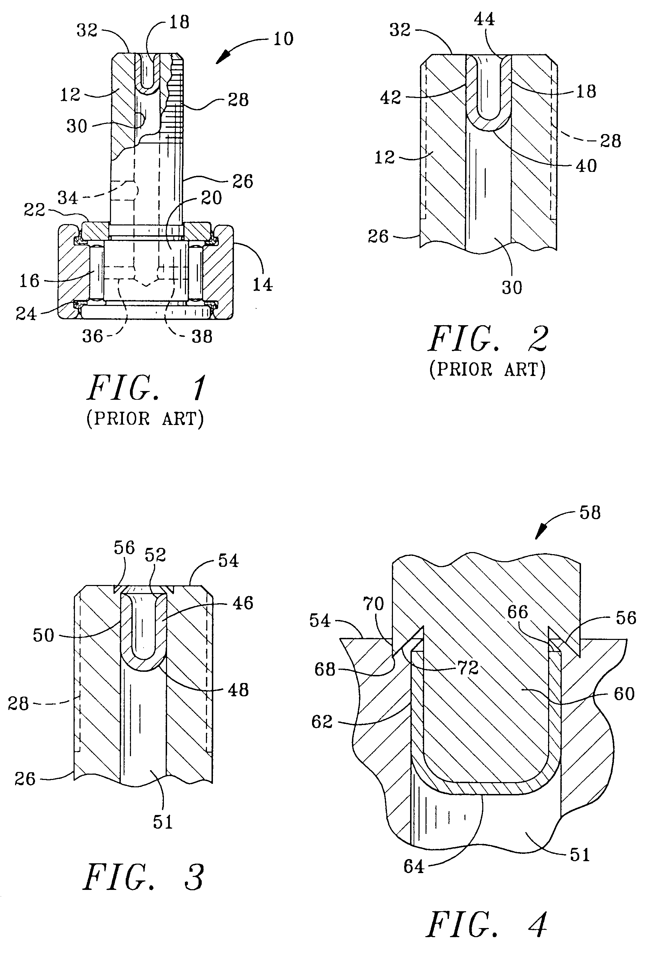

Figure 1 illustrates a known stud type track roller 10 comprising a stud 12, outer ring 14, bearing means 16 between stud 12 and outer ring 14, and a metal plug 18. The bearing means 16 provides rotatable mounting of the outer ring 14 over a stud head 20. Seals 22 and 24 of various forms may be provided to protect the bearing means 16 from debris and other contaminants and to retain lubricant. The bearing means 16 may include needle rollers as shown or sleeves or liners of various types.

The stud 12 has a shank portion 26 adjacent the stud head 20 and includes a threaded portion 28 adjacent the shank portion 26 for mounting of the track roller 10. An axial relubrication passage 30 extends from the stud end 32 into the stud head 20 as a cylindrical hole. A cross-drilled hole 34 provides a path for lubricant through the shank portion 26 to the axial relubrication passage 30. Cross-drilled holes 36 and 38 allow the lubricant to flow radially outwardly to the bearing means 16.

Figure 2 is an enlarged cross-sectional view of the metal plug 18 and portions of the stud 12. The metal plug 18 has a U-shaped cross section, a spherically rounded closed end 40 facing the stud head 20 and a cylindrical side portion 42 forming an interference fit with the relubrication passage 30. The metal plug 18 may have an open end with a square rim or rounded rim 44, as shown. The metal plug 18 is press fit into the relubrication passage 30 until the open end of the metal plug 18 is flush with the stud end 32 and is retained by friction.

Figure 3 is a cross-sectional view similar to Figure 2 but illustrating the present track roller with numerals unchanged for identical elements. The remainder of the stud shank 26, outer ring 14, bearing means 16, stud head 20, seals 22 and 24, and relubrication passages are as illustrated in Figure 1 or of other known configurations. For example, the seals 22 and 24 may be selected for suitability for high pressure lubrication.

The present metal plug 46 may be similar to the metal plug 18, as shown, with a U-shaped cross section, a spherically rounded closed end 48 facing the stud head 20, a cylindrical side portion 50 forming an interference fit with the relubrication passage 51, and a rounded rim 52. Alternatively, the metal plug 46 may have a flat closed end and/or square rim or other variation forming a close fit with the relubrication passage 51. The metal plug 46 may be made of low carbon steel, aluminium or other metal and is preferably hollow to avoid distortion of the threaded portion 28.

In the embodiment shown, the metal plug 46 is inserted through the stud end 54, closed end first, to a position axially inward of the stud end 54. After insertion of the metal plug 46, the stud end 54 is deformed such that the stud deforms radially inwardly to retain the metal plug 46 in the relubrication passage 51. This deformation comprises a narrowing of the relubrication passage 51 at the stud end 54 that partially blocks the rim of the metal plug 46, thus holding back lubricant, even at high lubricant pressures.

The stud is deformed radially inwardly, not radially outwardly, such that the threaded portion 28 is not disturbed. As shown in Figure 3, a V-shaped dimple or groove 56 may be formed in the stud end 54 by staking or similar operation to effect this deformation. The V-shaped dimple or groove 56 has its radially outward leg directed axially, as shown, such that material of the stud is moved only by its radially inward leg. However, simple localised deforming of the stud end 54 to form one or more dents, flattened portions or rounded portions adjacent the axial relubrication passage 51, without distortion of threaded portion 28, can also be used.

Figure 4 illustrates one type of tool that may be used to deform the stud end 54 and form the V-shaped dimple or groove 56. A tool 58 includes a pilot portion 60 that centres the tool 58 within the relubrication passage 51 and may also be used to insert and press the metal plug 62 into position axially inward of the stud end 54. The metal plug 62 is similar to the metal plug 52 but has a somewhat flattened closed end 64 and square rim 66, although various plug configurations may be used with similar tooling.

The tool 58 has pointed portions 68, axially directed radially outward surfaces 70 and radially inwardly angled surfaces 72 such that material of the stud is cut at the pointed portions 68 and flows radially inwardly due to engagement with the radially inwardly angled surfaces 72. The pointed portions 68 may be provided at intervals along the circumference of the tool 58, so as to provide dimples as a four-point stake, for example, or may be an annular ridge so as to provide an annular groove or other similar deformation of the stud end 54.

From the above it should be apparent that the present invention provides a track roller having an effective metal plug blocking an axial relubrication passage. It is envisaged that this improved track roller with plug allows use of relubrication pressure of 5800 psi (39 991 kN/m²) or more without risk that the metal plug will extrude out of the stud and fail to retain lubricant. If desired, insertion of the metal plug and the required deformation of the stud end may be conveniently and economically effected by a single stroke of a single tool.

## Claims

1. A track roller comprising a stud (12) having a stud head (20), stud shank (26) and stud end (54), the stud having a relubrication passage (51) extending to the stud end (54), an outer ring (14), bearing means (16) between the stud head and the outer ring for providing rotatable mounting of the outer ring on the stud head; and a metal plug (46) having a surface (50) forming a close fit with the relubrication passage (51); characterised in that the plug (46) is retained by a narrowing of the relubrication passage (51) at the stud end (54).

2. A track roller according to claim 1, wherein the narrowing of the relubrication passage (51) at the stud end (54) comprises an annular lip extending radially inward from a cylindrical axial portion of the passage (51).

3. A track roller according to claim 1 or 2, wherein the stud end (54) includes an annular V-shaped groove (56), the radially outward leg of the V being directed axially.

4. A track roller according to claim 1 or 2, wherein the stud end (54) includes a plurality of dimples distributed at intervals about the circumference of the relubrication passage.

5. A track roller according to any one of the preceding claims, wherein the metal plug (46) has a U-shaped cross section with a closed end (48) and an open end (52), the open end being directed toward the stud end (54).

6. A track roller according to claim 5, wherein the closed end (48) of the metal plug is rounded.

7. A track roller according to any one of the preceding claims, wherein the metal plug (46) is positioned axially inwardly of the stud end (54).

8. A track roller according to any one of the preceding claims and further comprising seal means (22, 24) between the stud head (20) and the outer ring (14) to protect the bearing means (16) from contamination and to retain lubricant within the bearing means.

9. A method of closing a relubrication passage in a track roller stud, comprising providing a stud (12) having a stud head (20), stud shank (26) and stud end (54), the stud having a relubrication passage (51) extending to the stud end and inserting a metal plug (46) into the relubrication passage at the stud end (54); characterised by deforming the stud end (54) such that the stud (12) deforms radially inwardly to retain the metal plug (46) within the relubrication passage (51).

10. A method according to claim 9, wherein the step of inserting the metal plug (46) into the relubrication passage (51) and deforming the stud end (54) are accomplished by one stroke of a single tool.

11. A method according to claim 9 or 10, wherein the metal plug (46) is inserted to a position axially inward of the stud end (54).

12. A method according to claim 9, 10 or 11, wherein the deforming forms an annular groove (56) and an adjacent annular lip, the annular lip extending into the relubrication passage (51) to retain the metal plug (46).

13. A method according to claim 12, wherein the annular groove (56) is V-shaped, the radially outward leg of the V being directed axially.

14. A method according to claim 9, 10 or 11, wherein the deforming forms a plurality of dimples distributed about the circumference of the relubrication passage (51).

15. A method according to claim 9, 10 or 11, wherein the deforming comprises staking.

16. A method according to any one of claims 9 to 15, wherein the metal plug (46) forms an interference fit with the relubrication passage (51) and is pressed into position during insertion.
